# EUROPEAN PATENT SPECIFICATION

(11) **EP 1 873 568 B1**
(45) Date of publication and mention of the grant of the patent: **24.02.2010**
(21) Application number: 07109080.7
(22) Date of filing: 29.05.2007
(51) Int. Cl.: G02B 7/08

(54) **Camera Module**
Kameramodul
Module d'appareil photographique

(30) Priority: 30.05.2006 JP 2006150367
(43) Date of publication of application: 02.01.2008
(73) Proprietor: Mitsumi Electric Co., Ltd., Tama-shi Tokyo (JP)
(72) Inventor: Sato, Yoshiaki Mitsumi Electric Co., Ltd Yamagata Business Division, Yamagata (JP); Osaka, Tomohiko Mitsumi Electric Co., Ltd Yamagata Business Division, Yamagata (JP); Ishizawa, Takashi Mitsumi Electric Co., Ltd Yamagata Business Division, Yamagata (JP)
(74) Representative: Solf, Alexander

(56) References cited:
- WO-A-2005/101083
- JP-A- 2004 280 031
- JP-A- 2006 079 072
- US-A- 4 238 845
- US-A1- 2003 062 978
- US-A1- 2006 028 320

## Description

### FIELD OF THE INVENTION

The present invention relates to a camera module, and more specifically to a camera module that can be used in small-sized electronic apparatuses such as digital cameras, camera-equipped cellular phones and the like.

### BACKGROUND ART

A camera module having a function of displacing a lens unit in a direction of an optical axis of the lens unit is used in relatively small-sized digital cameras, camera-equipped cellular phones and the like. This function is used for providing an autofocus function and/or zoom function, and is achieved by an interaction between a magnetic field generated by an electrical current flowing in a coil and a magnetic field generated by a yoke and magnets.

Such a camera module includes a barrel which holds the lens unit, a holder which houses the barrel, and a pair of leaf springs for supporting the holder so that the holder is displaceable in a direction of an optical axis of the lens unit.

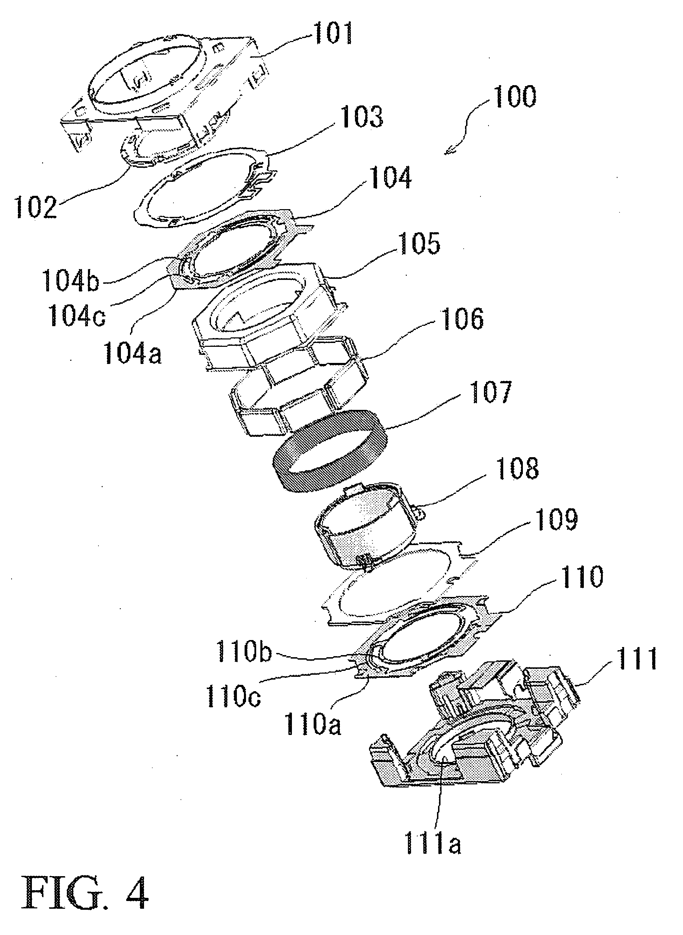

FIG. 4 is an exploded perspective view of an autofocus actuator assembly 100 used in a conventional camera module for displacing a lens unit (not shown) in a direction of an optical axis thereof. It is to be noted that an imaging element (not shown) is provided below a base 111 of the actuator assembly 100.

A holder 108 that houses a barrel (not shown) holding the lens unit is provided between a cover 101 and the base 111 so that the holder 108 is displaceable in a direction of an optical axis of the lens unit together with the lens unit.

An inner annular portion 104b of an upper leaf spring 104 and an inner annular portion 110b of a lower leaf spring 110 are attached to the upper and lower portions of the holder 108, respectively. Further, an outer annular portion 104a of the upper leaf spring 104 is attached to an upper surface of a yoke 105 and an outer annular portion 110a of the lower leaf spring 110 is attached to the base 111, respectively.

Three bridge portions 104c are formed between the outer annular portion 104a and the inner annular portion 104b of the upper leaf spring 104. As is the same with the upper leaf spring 104, three bridge portions 110c are formed between the outer annular portion 110a and the inner annular portion 110b of the upper leaf spring 110. By resilient deformation of the three bridge portions 104c and 110c, the holder 108 can be displaced in a direction of an optical axis of the lens unit.

A plurality of magnets 106 are bonded to the yoke 105 so as to produce a magnetic field. Further, a coil 107 is disposed in the magnetic field produced by the magnets. The coil 107 is wounded around an outer periphery of the holder 108. By supplying a current to the coil 107 to generate a magnetic field, the holder 108 can be displaced in a direction of an optical axis of the lens unit due to an interaction between the magnetic field generated by an electrical current flowing in the coil and the magnetic field generated by the yoke 105 and magnets 106. In this regard, it is to be noted that a component denoted by the reference numeral 103 is a flexible printed circuit board used for supplying a current to the coil 107, a component denoted by the reference numeral 102 is a stopper attached to the upper surface of the inner annular portion of the upper leaf spring 104, and a component donated by the reference numeral 109 is a plate provided between the lower leaf spring 110 and the bottom surface of the yoke 105.

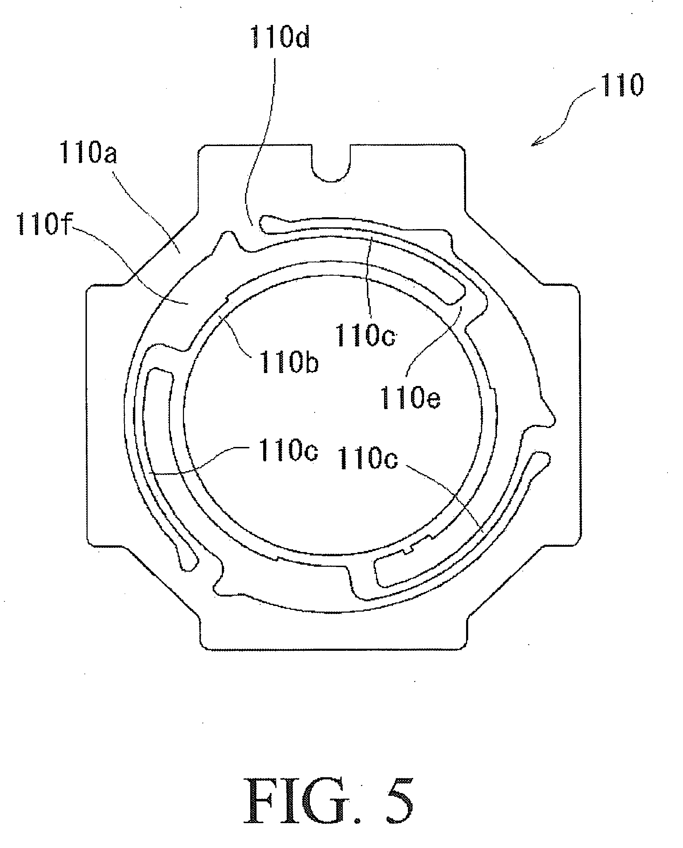

A plan view of the lower leaf spring 110 described above is shown in FIG. 5. In this regard, it is to be noted that the upper leaf spring 104 and the lower leaf spring 110 have substantially the same structures excepting that the shapes of the outer annular portions 104a and 110a thereof are different from to each other. Therefore, hereinbelow, a description will be made only with regard to the lower leaf spring 110, and a description with regard to the upper leaf spring 104 is omitted.

The lower leaf spring 110 comprises an outer annular portion 110a, an inner annular portion 110b which is concentrically provided inside the outer annular portion 110a through a predetermined annular spacing 110f, and three bridge portions 110c coupled between the outer annular portion 110a and the inner annular portion 110b so that the inner annular portion 110b is displaceably supported with respect to the outer annular portion 110a through the bridge portions 110c. Each of the bridge portions 110c includes an arc-shaped part having an outer end and an inner end, an outer base part 110d coupled between the outer end of the arc-shaped part and the inner peripheral edge of the outer annular portion 110a, and an inner base part 110e coupled between the inner end of the arc-shaped part and the outer peripheral edge of the inner annular portion 110 b. The arc-shaped part is positioned inside the annular spacing 110f so that it extends along the inner peripheral edge of the outer annular portion 110a and the outer peripheral edge of the inner annular portion 110b through a predetermined angle.

When the lower leaf spring 110 is attached to the base 111, the inner annular portion 110b is pushed up by protrusions 111a which protrude upward from the edge of periphery of a central opening of the base 111. Thus, the plurality of bridge portions 110c can bias the holder 108 toward the side of the imaging element (the lower side of FIG. 4) due to the resilient force of the bride portions 110c. That is, the holder 108 is provided inside the actuator assembly 100 in a state that a back tension is being applied by the upper and lower leaf springs 104 and 110.

It is to be noted that such upper leaf spring 104 and lower leaf spring 110 described above are disclosed in JP-A-No. 2004-280031,

When a small-sized electronic apparatus provided with the camera module described above is accidentally dropped, large stress is instantaneously generated in each of the bride portions 110c of the upper leaf spring 104 and lower leaf spring 110. This stress is caused by a large displacement of the holder 108 by the dropping impact.

This stress concentrates on two base parts of each bridge portions 110c, that is, the base part 110d on the side of the outer annular portion 110a and the base part 110e on the side of the inner annular portion. There is a problem in that when such stress concentration occurs, the base parts 110d and 110e and/or their surroundings may be plastic-deformed.

If such plastic deformation occurs, the biasing force of the three bridge portions 110c described above by which the bridge portions bias the holder 108 toward the side of the imaging element may become weak. In this state, when a given current required in the normal condition is supplied to the coil 107 so as to displace the holder 108 toward the side of the cover 101 (the upper side of FIG.4) for a predetermined distance, there is a case that the holder 108 cannot be displaced for the predetermined distance. That is, the initial responsibility of the holder 108 is changed, so that it becomes difficult to accurately control the displacement of the holder 108.

Further, when the holder 108 is largely displaced due to the dripping impact and thereby the bridge portion is plastic-deformed so that the bridge portion is deformed so as to have a convex form bent toward the side of the cover 101 (that is, the bent part is directed upwardly), there is a case that a part of the deformed bridge portion collides against the peripheral side of the coil 107 to cause unfavorable short-circuit and braking of a wire of the coil 107.

### SUMMARY OF THE INVENTION

The present invention has been made in view of the problems mentioned above. Accordingly, it is an object of the present invention to provide a camera module that can prevent concentration of stress to bridge portions of leaf springs when a dropping impact is applied to the camera module to thereby provide superior anti-impact characteristics to the camera module.

In order to achieve the object, the present invention is directed to a camera module according to claim 1.

According to the camera module having the above structure, even if a small-sized electronic apparatus equipped with the camera module having the above structures is dropped and thereby its holder is largely displaced, stress exerted on the bridge portions is dispersed by the stress concentration preventing means, and thus it is possible to prevent plastic deformation in the bridge portions.

By the provision of the slit, each of the bridge portions is divided into two ore more portions. Therefore, even in the case where the holder is largely displaced by the dropping impact, the stress exerted on the bridge portion is dispersed into the divided bridge portions. Therefore, it is possible to effectively prevent plastic deformation from occurring in the bridge portion.

Further, in the camera module of the present invention, it is preferred that each bridge portion has outer and inner base parts at which the bridge portion is coupled to the outer annular portion and the inner annular portion, respectively, and the slit is formed so that it extends along the shape of the base parts of each bridge portion.

This also makes it possible to disperse the stress exerted on the respective base parts of the bridge portion, and thus it is possible to prevent plastic deformation from occurring in the base parts of the bridge portion.

Furthermore, in the camera module of the present invention, it is preferred that in each of the bridge portions the slit is formed in a portion of the bridge portion other than the outer base part thereof.

By limiting the area of each bridge portion where the slit is formed in the outer base part of the bridge portion, it is possible to regulate a direction to which deformation is caused. This makes it possible to prevent a deformed part of the bridge portion from contacting other components of the camera module such as a coil thereof even in the case where the bridge portion is deformed by the dropping impact.

### BRIEF DESCRIPTION OF THE DRAWING

FIG. 1 is a plan view of an upper leaf spring 20 used in a camera module according to an embodiment of the present invention.
FIG. 2 is a plan view of a lower leaf spring 30 used in the camera module according to the embodiment of the present invention.
FIG.3 is an exploded perspective view of an actuator assembly 1 of the camera module according to the embodiment of the present invention.
FIG.4 is an explored perspective view of an actuator assembly 100 of the conventional camera module.
FIG.5 is a plan view of the lower leaf spring 110 used in the actuator assembly 100 shown in FIG.4.

### DETAILED DESCRIPTION OF THE PREFERRED EMBODIMENTS

A camera module according to an embodiment of the present invention will be described below with reference to the accompanying drawings.

A camera module is composed from a lens unit (not shown) which constitutes an optical system of the camera module; a holder 8 which houses the lens unit and is displaceable along an optical axis of the lens unit; a coil 7 provided on the holder 8 ; a yoke 5 and magnets 6 for providing a magnetic field to the coil 7; an upper leaf spring 20 and a lower leaf spring 30 for supporting the holder 8; and an imaging element (not shown) provided below the lens unit.

In this camera module, the upper leaf spring 20 includes an outer annular portion 21, an inner annular portion 22 which is concentrically provided inside the outer annular portion 21 through a predetermined annular spacing 20f, and three bridge portions 23 coupled between the outer annular portion 21 and the inner annular portion 22 so that the inner annular portion 22 is resiliently supported and displaceable with respect to the outer annular portion 21. Each of the bridge portions 23 is provided so as to extend along the inner peripheral edge of the outer annular portion 21 and the outer peripheral edge of the inner annular portion 22 through a predetermined angle.

As is the same with the upper leaf spring 20, the lower spring 30 also includes an outer annular portion 31, an inner annular portion 32 which is concentrically provided inside the outer annular portion 31 through a predetermined annular spacing 30f, and three bridge portions 33 coupled between the outer annular portion 31 and the inner annular portion 32 so that the inner annular portion 32 is resiliently supported and displaceable with respect to the outer annular portion 31. Each of the bridge portions 33 is provided so as to extend along the inner peripheral edge of the outer annular portion 31 and the outer peripheral edge of the inner annular portion 32 through a predetermined angle.

The inner annular portion 22 of the upper leaf spring 20 and the inner annular portion 32 of the lower leaf spring 30 are attached to the upper and lower end surfaces of the holder 8, respectively, so that the holder 8 is displaceable along an optical axis direction of the lens unit with the resilient deformation of the bridge portions 23 and 33 of the upper and lower leaf springs 20 and 30. Each of the bridge portions 23 and 33 is formed with at least one slit 24, 34 which serves as a stress concentration preventing means, respectively.

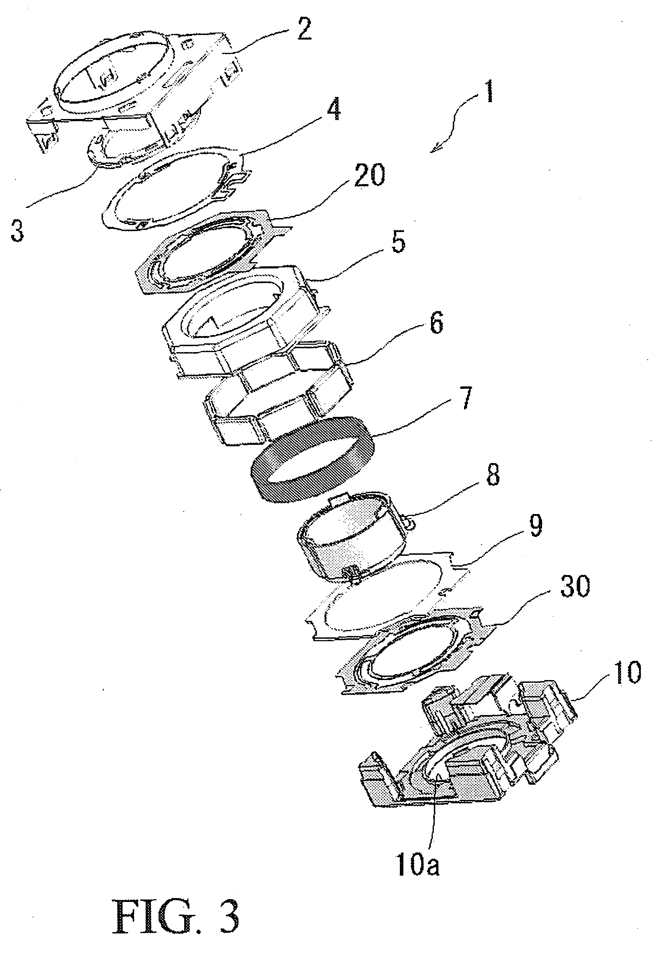

Hereinbelow, the actuator assembly 1 of the camera module according to the embodiment of the present invention will be described in detail with reference to FIG.3. In this regard, it is to be noted that the imaging element (not shown) is provided below a base 10.

The holder 8 that houses the barrel (not shown) holding the lens unit is provided between a cover 2 and the base 10 so that the holder 8 is displaceable in a direction of an optical axis of the lens unit.

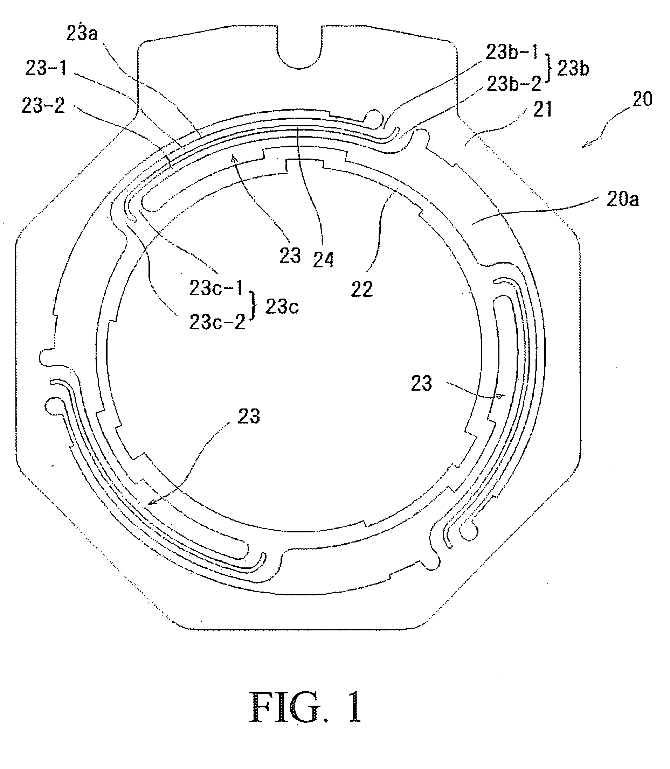

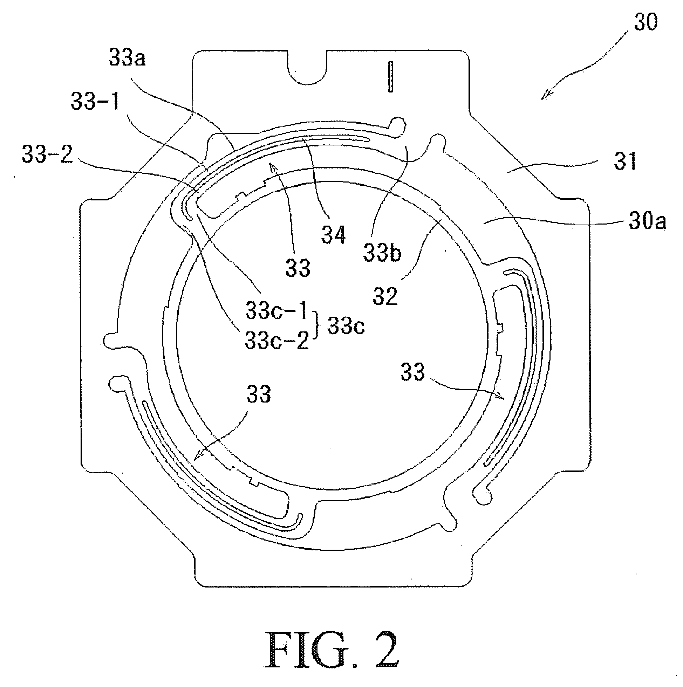

The inner annular portion 21 of the upper leaf spring 20 is attached to the upper end surface of a cylindrical portion of the holder 8. In the same way, the inner annular portion 31 of the lower leaf spring 30 is attached to the lower end surface of the cylindrical portion of the holder 8. The outer annular portion 21 (see FIG. 1) of the upper leaf spring 20 is attached to the upper surface of the yoke 5 and the outer annular portion 31 (see FIG.2) of the lower leaf spring 30 is attached to the base 10.

The plurality of magnets 6 are bonded to the yoke 5 so as to produce a magnetic field. Further, the coil 7 is disposed in the magnetic field generated by the magnets and the yoke. The coil 7 is wounded around an outer periphery of the holder 8. The holder 8 can be displaced in a direction of an optical axis of the lens unit by supplying a current to the coil 7. It is noted that a component denoted by the reference numeral 4 is a flexible printed circuit board used for supplying a current to the coil 7, a component denoted by the reference numeral 3 is a stopper attached to the upper surface of the inner annular portion 22 (see FIG. 1) of the upper leaf spring 20, and a component donated by the reference numeral 9 is a plate provided between the lower leaf spring 30 and the bottom surface of the yoke 5.

Next, the upper leaf spring 20 will be described in details with reference to FIG. 1. The upper leaf spring 20 is formed from a thin metal plate made of beryllium copper through punching process and has the ring shaped outer annular portion 21 and the ring shaped inner annular portion 22 which is concentrically provided inside the outer annular portion 21 through the predetermined annular spacing 20f.

The inner annular portion 22 is supported by the outer annular portion 21 through the bridge portions 23. Each of the bridge portions 23 includes an arc-shaped part 23a having an outer end and an inner end, an outer base part 23b coupled between the outer end of the arc-shaped part 23a and the inner peripheral edge of the outer annular portion 21, and an inner base part 23c coupled between the inner end of the arc-shaped part 23a and the outer peripheral edge of the inner annular portion 22. The arc-shaped part 23a is positioned inside the annular spacing 20f so that it extends along the inner peripheral edge of the outer annular portion 21 and the outer peripheral edge of the inner annular portion 22 through a predetermined angle.

Each of the bridge portions 23 has a slit 24 which serves as a stress concentration preventing means. The slit 24 is formed so that it extends along substantially the entire of the bridge portion 23 to thereby divide the bridge portion 23 into two bridging parts 23-1 and 23-2. Preferably, the slit 24 is formed so that the width of the outer bridging part 23-1 is larger than the width of the inner bridging part 23-2. The both end portions of the slit 24 are curved along the shapes of the outer and inner base parts 23b and 23c of the bridge portion 23, respectively, to thereby divide each of the outer and inner base parts 23b and 23c into two divided base parts 23b-1, 23b-2 and 23c-1, 23c-2, respectively. By forming such a slit 24 in each bridge portions 23, the bridge portion 23 is easily to be deformed sideways, and stress concentrating points in the bridge portion 23 are dispersed, so that unfavorable stress concentration into specific portions can be prevented.

Next, the lower leaf spring 30 will be described with reference to FIG. 2. The lower leaf spring 30 has substantially the same structure as the upper leaf spring 20 described above excepting the shapes of slits 34 described below. Namely, the lower leaf spring 30 is formed from a thin metal plate made of beryllium copper through punching process and has the ring shaped outer annular portion 31 and the ring shaped inner annular portion 32 which is concentrically provided inside the outer annular portion 31 through the predetermined annular spacing 30f. The inner annular portion 32 is supported by the outer annular portion 31 through the bridge portions 33. Each of the bridge portions 33 includes an arc-shaped part 33a having an outer end and an inner end, an outer base part 33b coupled between the outer end of the arc-shaped part 33a and the inner peripheral edge of the outer annular portion 31, and an inner base part 33c coupled between the inner end and the outer peripheral edge of the inner annular portion 32. The arc-shaped part 33a is positioned inside the annular spacing 30f so that it extends along the inner peripheral edge of the outer annular portion 31 30a and the outer peripheral edge of the inner annular portion 32 through a predetermined angle.

Each of the bridge portions 33 has the slit 34 which serves as a stress concentration preventing means. The slit 34 is formed so that it extends along a portion of the bridge portion 33 other than the outer base part 33b of the bridge portion 33 to thereby divide the bridge portion 33 into bridging parts 33-1 and 33-2. Preferably, the slit 34 is formed so that the width of the outer bridging part 33-1 is larger than the width of the inner bridging part 33-2. The end portion of the slit 34 at the side of the inner annular portion 32 is curved along the shape of the inner base part 33c of the bridge portion 33 to thereby divide the inner base part 33c into two divided base parts 33c-1, 33c-2, respectively. Since the slit 34 is not formed in the outer base part 33b, the outer base part 33b is not divided into two parts as the inner base part 33c. By forming such a slit 34 in each bridge portion 33, the bridge portion 33 is easily to be deformed sideways, and stress concentrating points in the bridge portion 33 are dispersed, so that unfavorable stress concentration into specific portions can be prevented.

When the lower leaf spring 30 is attached to the base 10, the inner annular portion 32 is pushed up by protrusions 10a (see FIG. 3) which protrude upward from the edge of a peripheral portion of a central opening of the base 10. Thus, the plurality of bridge portions 30c can bias the holder 8 toward the side of the imaging element (the lower side of FIG. 3) due to the resilient force of the bride portions 30c. That is, the holder 8 is provided inside the actuator assembly 1 in a state that a back tension is being applied by the upper and lower leaf springs 20 and 30.

Hereinbelow, a description will be made with regard to the advantages of this embodiment. When a small-sized electronic apparatus provided with the camera module according to the embodiment is accidentally dropped, large stress is instantaneously generated in each of the bride portions 23 of the upper leaf spring 20 and each of the bridge portions 33 of the lower leaf spring 30. This stress is caused by a large displacement of the holder 8 by the dropping impact.

The stress generated in each of the bridge portions 23 of the upper leaf spring 20 are separated into the bridging parts 23-1 and 23-2. This makes it possible to prevent the plastic deformation of each of the bridge portions 23 by the dropping impact.

The stress due to the dropping impact concentrates on the outer base part 23b on the side of the outer annular portion 21 and the inner base part 23c on the side of the inner annular portion 22 of each of the bridging portions 23. However, since each outer base part 23b is formed into the divided base parts 23b-1, 23b-2 by the slit 24 and each inner base part 23c is formed into the divided base parts 23c-1 and 23c-2 by the slit 24, the stress is also separated into these divided base parts 23b-1, 23b-2 and 23c-1, 23c-2. This makes it possible to effectively prevent the plastic deformation of each of the bridge portions 23 at the outer base part 23b and the inner base part 23c.

Further, stress generated in each of the bridge portions 33 of the lower leaf spring 30 is separated into the bridging parts 33-1 and 33-2. Furthermore, in the inner base part 33c of the bridge portion 33, the stress is separated into the divided base parts 33c-1 and 33c-2 of the inner base part 33c. This makes it possible to prevent the plastic deformation of each of the bridge portions at the inner base part 33c of the bridge portion 33.

Further, as described above, no slit is formed in the outer base part 33b of each of the bridge portions 33. Therefore, the outer base part 33b is difficult to be elastically deformed rather than the other portions of the bridge portion 33. Further, as described above, since the holder 8 is provided inside the actuator assembly 1 in a state that a back tension is being applied by the upper and lower leaf springs 20 and 30, the bridge portions 33 of the lower leaf spring 30 (in particular, the portion of each bridge portion 33 other than the outer base part thereof) are normally biased downwardly, that is, toward the side of the imaging element (the lower side of FIG. 3). With this structure, when the holder 8 is suddenly displaced due to dropping impact or the like and thereby the bridge portions 23, 33 are deformed, the bridge portions 33 of the lower leaf spring 33 are surely deformed downwardly (that is, bent downwardly) since no slit is formed in the outer base part 33b of each bridge portion 33 and the back tension is being applied thereto. In other word, the structure of the lower leaf spring 30 makes it possible to regulate a direction to which the bridge portion 33 is deformed (bent) when dropping impact is applied to the electronic apparatus provided with the camera module of the present invention. As a result, it is possible to prevent the deformed part of the bridge portion 33 from colliding against a part of the coil 7 to cause sudden short-circuit or braking of a wire of the coil 7. Further, the structure of the lower leaf spring 30 also makes it possible to prevent the deformed part of the bridge portion from colliding against components other than the coil 7.

In the embodiment described above, although only one slit is formed in each bridge portion of the leaf spring, it is also possible to form two (or more) slits on the bridge portion in a side by side relationship.

Further, it is not necessary to form a single slit along the extending direction of the bridge portion. It is also possible to form separate slits along the extending direction of the bridge portion in a continuous manner.

Furthermore, it is not necessary for the slit to have the same width along its extending direction. In other words, any form or shape of slits may be employed as long as they serve as a means for preventing concentration of stress.

Moreover, the camera module of this embodiment described above have two leaf springs consisting of the upper leaf spring 20 and the lower leaf spring 30, but it is also possible to apply the stress concentration preventing of this invention to a camera module having one leaf spring and a camera module having three or more leaf springs. It should be understood that the scope of the present invention defined in the following claims is not limited by the number of leaf springs.

## Claims

1. A camera module, comprising:
a lens unit which constitutes an optical system of the camera module;
a holder (8) which houses the lens unit and is displaceable along an optical axis direction of the lens unit;
a coil (7) provided on the holder (8);
a yoke (5) and magnets (6) for providing a magnetic field to the coil (7);
upper and lower leaf springs (20, 30) for supporting the holder (8); and
an imaging element provided below the lens unit,
wherein each of the upper and lower leaf springs (20, 30) comprises an outer annular portion (21, 31), an inner annular portion (22, 32) which is provided inside the outer annular portion (21, 31) so as to be displaceable with respect to the outer annular portion (21, 31) and is attached to the holder (8), and a plurality of bridge portions (23, 33) which are coupled between the outer annular portion (21, 31) and the inner annular portion (22, 32) so as to resiliently support the inner annular portion (22, 32) with respect to the outer annular portion (21, 31), wherein each of the bridge portions (23, 33) is provided so as to extent between an inner peripheral edge of the outer annular portion (21, 31) and an outer peripheral edge of the inner annular portion (22, 32) and wherein each bridge portion (23, 33) has outer and inner base parts (23b, 33b and 23c, 33c) at which the bridge portion (23, 33) is coupled to the outer annular portion (21, 31) and the inner annular portion (22, 32), respectively,
**CHARACTERIZED IN THAT** each of the bridge portions (23, 33) is formed with means for preventing concentration of stress in the form of at least one slit (24, 34) formed in the bridge portion (23, 33) along the extending direction thereof, wherein the slit (24, 34) extends from the inner base part (23c, 33c) toward the outer base part (23b, 33b) thereof along a substantial portion of the bridge portion (23, 33).

2. The camera module as claimed in claim 1, wherein the slit (24) extends to the outer base part (23b) thereof.

3. The camera module as claimed in claim 2, wherein the slit (24, 34) is formed so that it extends along the shape of the base parts of each bridge portion (23, 33).

4. The camera module as claimed in claim 1 or 2, wherein the slit of each of the bridge portions (23) of the upper leaf spring (20) has a different structure from the slit of each of the bridge portions (33) of the lower leaf spring (30).

5. The camera module as claimed in claim 4, wherein the slit (34) of each of the bridge portions (23) of the upper leaf spring (20) extends from the inner base part (23c) to the outer base part (23b) thereof, whereas the slit of each of the bridge portions (33) of the lower leaf spring (30) extends from the inner base part (23c, 33c) before the outer base part (33b) thereof so that no slit is formed in the outer base part (33b).

## Patentansprüche

1. Ein Kameramodul, das folgendes einschließt:
eine Linseneinheit, die ein optisches System des Kameramoduls aufbaut;
einen Halter (8), der die Linseneinheit einhaust und entlang einer optischen Achsenrichtung der Linseneinheit verschiebbar ist;
eine auf dem Halter (8) vorgesehene Spule (7);
ein Joch (5) und Magnete (6), zur Bereitstellung eines Magnetfeldes für die Spule (7);
obere und untere Blattfedern (20, 30) zum Tragen des Halters (8); und
ein unterhalb der Linseneinheit vorgesehenes bildgebendes Element,
wobei die obere und die untere Blattfeder (20, 30) jeweils einen äußeren ringförmigen Teil (21, 31), einen inneren ringförmigen Teil (22, 32), der im Inneren des äußeren ringförmigen Teils (21, 31) vorgesehen ist, so dass er bezüglich des äußeren ringförmigen Teils (21, 31) verschiebbar ist und an dem Halter (8) befestigt ist, und eine Vielzahl von Brückenteilen (23, 33), die zwischen dem äußeren ringförmigen Teil (21, 31) und dem inneren ringförmigen Teils (22, 32) gekoppelt sind, so dass der innere ringförmige Teil (22, 32) bezüglich des äußeren ringförmigen Teils (21, 31) elastisch getragen wird, wobei die Brückenteile (23, 33) jeweils so vorgesehen sind, dass sie zwischen einem inneren peripheren Rand des äußeren ringförmigen Teils (21, 31) und einem äußerem peripheren Rand des inneren ringförmigen Teils (22, 32) verlaufen, und wobei jeder Brückenteil (23, 33) äußere und innere Basisteile (23b, 33b und 23c, 33c) aufweist, an welchen der Brückenteil (23, 33) mit dem äußeren ringförmigen Teil (21, 31) bzw. dem inneren ringförmigen Teil (22, 32) gekoppelt ist,
**DADURCH GEKENNZEICHNET, DASS** die Brückenteile (23, 33) jeweils mit Mitteln zur Verhinderung der Konzentrierung von Belastung in der Form von mindestens einem Schlitz (24, 34), der in dem Brückenteil (23, 33) entlang der Verlaufsrichtung davon ausgebildet ist, ausgebildet sind, wobei der Schlitz (24, 34) von dem inneren Basisteil (23c, 33c) in Richtung des äußeren Basisteils (23b, 33b) davon entlang eines wesentlichen Teils des Brückenteils (23, 33) verläuft.

2. Das Kameramodul nach Anspruch 1, wobei der Schlitz (24) bis zu dem äußeren Basisteil (23b) davon verläuft.

3. Das Kameramodul nach Anspruch 2, wobei der Schlitz (24, 34) so geformt ist, dass er entlang der Form der Basisteile von jedem Brückenteil (23, 33) verläuft.

4. Das Kameramodul nach Anspruch 1 oder 2, wobei der Schlitz von jedem der Brückenteile (23) der oberen Blattfeder (20) eine von dem Schlitz von jedem der Brückenteile (33) der unteren Blattfeder (30) unterschiedliche Struktur aufweist.

5. Das Kameramodul nach Anspruch 4, wobei der Schlitz (34) von jedem der Brückenteile (23) der oberen Blattfeder (20) von dem inneren Basisteil (23c) zu dem äußeren Basisteil (23b) davon verläuft, wohingegen der Schlitz von jedem der Brückenteile (33) der unteren Blattfeder (30) von dem inneren Basisteil (23c, 33c) vor dem äußeren Basisteil (33b) davon verläuft, so dass in dem äußeren Basisteil (33b) kein Schlitz ausgebildet ist.

## Revendications

1. Module d'appareil photographique, comprenant :
une unité formant objectif qui constitue un système optique du module d'appareil photographique ;
un support (8) qui loge l'unité formant objectif et est déplaçable le long d'une direction d'axe optique de l'unité formant objectif;
une bobine (7) prévue sur le support (8) ;
une fourche (5) et des aimants (6) pour fournir un champ magnétique à la bobine (7) ;
des ressorts à lames supérieur et inférieur (20, 30) pour supporter le support (8) ; et
un élément d'imagerie prévu au-dessous de l'unité formant objectif,
dans lequel chacun des ressorts à lames supérieur et inférieur (20, 30) comprend une partie annulaire externe (21, 31), une partie annulaire interne (22, 32) qui est prévue à l'intérieur de la partie annulaire externe (21, 31) afin d'être déplaçable par rapport à la partie annulaire externe (21, 31) et est fixée sur le support (8) et une pluralité de parties de pont (23, 33) qui sont couplées entre la partie annulaire externe (21, 31) et la partie annulaire interne (22, 32) afin de supporter de manière élastique la partie annulaire interne (22, 32) par rapport à la partie annulaire externe (21, 31), dans lequel chacune des parties de pont (23, 33) est prévue afin de s'étendre entre un bord périphérique interne de la partie annulaire externe (21, 31) et un bord périphérique externe de la partie annulaire interne (22, 32), et dans lequel chaque partie de pont (23, 33) a des parties de base externe et interne (23b, 33b et 23c, 33c) au niveau desquelles la partie de pont (23, 33) est couplée à la partie annulaire externe (21, 31) et à la partie annulaire interne (22, 32), respectivement,
**caractérisé en ce que** chacune des parties de pont (23, 33) est formée avec des moyens pour empêcher la concentration de tension sous la forme d'au moins une fente (24, 34) formée dans la partie de pont (23, 33) le long de sa direction d'extension, dans lequel la fente (24, 34) s'étend à partir de la partie de base interne (23c, 33c) vers sa partie de base externe (23b, 33b) le long d'une partie sensible de la partie de pont (23, 33).

2. Module d'appareil photographique selon la revendication 1, dans lequel la fente (24) s'étend vers sa partie de base externe (23b).

3. Module d'appareil photographique selon la revendication 2, dans lequel la fente (24, 34) est formée de sorte qu'elle s'étend le long de la forme des parties de base de chaque partie de pont (23, 33).

4. Module d'appareil photographique selon la revendication 1 ou 2, dans lequel la fente de chacune des parties de pont (23) du ressort à lames supérieur (20) a une structure différente de la fente de chacune des parties de pont (33) du ressort à lames inférieur (30).

5. Module d'appareil photographique selon la revendication 4, dans lequel la fente (34) de chacune des parties de pont (23) du ressort à lames supérieur (20) s'étend à partir de la partie de base interne (23c) vers sa partie de base externe (23b), alors que la fente de chacune des parties de pont (33) du ressort à lames inférieur (30) s'étend à partir de la partie de base interne (23c, 33c) avant sa partie de base externe (33b) de sorte qu'aucune fente n'est formée dans la partie de base externe (33b).
